Europäisches Patentamt

(19) European Patent Office

Office européen des brevets

(11) Publication number : **0 564 206 A2**

# (12) EUROPEAN PATENT APPLICATION

(21) Application number : **93302417.6**

(22) Date of filing : **29.03.93**

(51) Int. Cl.⁵ : $C08L\ 23/02$, // ($C08L23/02$, $23:06$)

(30) Priority : **30.03.92 JP 74342/92**
**09.12.92 JP 329121/92**
**09.12.92 JP 329122/92**

(43) Date of publication of application :
**06.10.93 Bulletin 93/40**

(84) Designated Contracting States :
**BE DE FR GB IT NL SE**

(71) Applicant : **TERUMO Kabushiki Kaisha**
**44-1 Hatagaya 2-chome Shibuya-ku**
**Tokyo (JP)**

(72) Inventor : **Shinonome, Osami, c/o Terumo**
**Kabushiki Kaisha**
**818 Misonodaira, Fujinomiya-shi**
**Shizuoka-ken (JP)**
Inventor : **Nemoto, Yasushi, c/o Terumo**
**Kabushiki Kaisha**
**818 Misonodaira, Fujinomiya-shi**
**Shizuoka-ken (JP)**
Inventor : **Ochiai, Shoji, c/o Terumo Kabushiki**
**Kaisha**
**818 Misonodaira, Fujinomiya-shi**
**Shizuoka-ken (JP)**

(74) Representative : **Harrison, David Christopher**
**et al**
**MEWBURN ELLIS 2 Cursitor Street**
**London EC4A 1BQ (GB)**

(54) **Medical container.**

㊸ The medical container having a multi-layer structure including (A) an outer layer and an inner layer both made of at least one crystalline polyolefin, and (B) an intermediate layer made of a polymer composition comprising (a) at least one crystalline polyolefin and (b) amorphous polypropylene.

EP 0 564 206 A2

## BACKGROUND OF THE INVENTION

The present invention relates to a medical container made of soft plastics, such as a bag or a tube for storing or transferring medical liquids such as blood, liquids for infusion, etc. used in the field of medicine.

Materials for medical containers such as bags and tubes used for blood-collecting, blood transfusion, infusion, etc. are required to be safe and hygienic and also to have various other properties. Among other things, well balanced softness, transparency and heat resistance are important for such materials. Conventional polymer materials widely used for such applications are soft polyvinyl chloride, and ethylenic polymers such as ethylene-vinyl acetate copolymer, low-density polyethylene, etc. However, the soft polyvinyl chloride suffers from the exudation of plasticizers, discoloration, difficulty in treating its wastes, etc. The ethylenic polymers fail to have well balanced softness, transparency and heat resistance; particularly the low-density polymers are poor in a heat resistance, failing to withstand a high-pressure steam sterilization usually conducted at 100-130°C, although they have relatively good softness and transparency before the sterilization. The ethylenic polymers are also likely to suffer from blocking, whitening, spot-like unevenness, deformation, etc. Alth ough chemical cross-linking, radiation cross-linking, etc. can be conducted to improve the heat resistance of the ethylenic polymers, such treatments lead to a more lengthy and complicated production process.

Polypropylene is a polymer widely used for medical container, and its heat resistance is much better than that of polyethylene. However, polypropylene is poor in softness, resulting in rather limited applications in the medical field.

As for other polymers, polybutene-1 is recently attracting much attention because of its relatively high softness. However, it also fails to show sufficient transparency.

## OBJECT AND SUMMARY OF THE INVENTION

Accordingly, an object of the present invention is to provide a medical container made of soft plastics having good softness, transparency and heat resistance.

As a result of intense research in view of the above object, the inventors have found that by utilizing a blend of amorphous polypropylene and a crystalline polyolefin for a single-layer or multi-layer sheet, it is possible to provide a medical container with improved softness and transparency while keeping its heat resistance at such a level as to withstand a high-pressure steam sterilization treatment. The present invention has been completed based on this finding.

Thus, the medical container according to the first embodiment of the present invention is made of a polymer composition comprising as main components (a) at least one crystalline polyolefin and (b) amorphous polypropylene.

The medical container according to the second embodiment of the present invention has a multi-layer structure comprising (A) an outer layer and an inner layer both made of at least one crystalline polyolefin, and (B) an intermediate layer made of a polymer composition comprising (a) at least one crystalline polyolefin and (b) amorphous polypropylene.

A particular embodiment of the invention, as a multi-layer container, will now be described.

[1] First sheet for medical container

The first sheet for the medical container of the present invention has a single-layer structure made of a polymer composition comprising as main components (a) at least one crystalline polyolefin and (b) amorphous polypropylene.

(1) Composition

(a) Crystalline polyolefin

(i) Crystalline polymer or copolymer of propylene

Among the components (a) usable in the present invention, the crystalline polymer or copolymer of propylene is preferable. It is isotactic or syndiotactic polypropylene or a copolymer based on propylene usually produced in the presence of a stereospecific polymerization catalyst such as a Ziegler-Natta catalyst. From the aspect of transparency and softness, a propylene copolymer, particularly a random propylene copolymer is preferable.

The production of the random propylene copolymer is described, for instance, in Japanese Patent Laid-Open No. 56-74109. The randomness of the copolymer can be properly controlled by the types and amounts of comonomers, catalysts, additives, etc. process types (batch method, continuous method), conditions such as temperature and time, etc.

The comonomers usable for this propylene copolymer include ethylene, and other $\alpha$-olefins

2

having 4-12 carbon atoms such as butene-1, pentene-1, hexene-1, octene-1, decene-1, dodecene-1, 4-methylpentene-1, etc. The amount of the comonomer is preferably about 3-40 mol %, more preferably about 5-30 mol %.

From the aspect of a balance of softness, transparency and heat resistance, it is preferable that the crystalline polymer or copolymer of propylene has a flexural modulus (JIS K7203) of 6,000 kg/cm² or less, and a Vicat softening point (JIS K7206) of 100°C or higher. Further, from the aspect of formability and mechanical properties of moldings, its melt flow rate (MFR, at 230°C under 2,160 g) is preferably 0.3-40 g/10 minutes, more preferably 0.5-30 g/10 minutes.

(ii) Crystalline polymer or copolymer of butene-1

As the component (a), a crystalline polymer or copolymer of butene-1 is also preferable. It is isotactic polybutene-1 or an isotactic copolymer based on butene-1, which may be produced by known methods.

In the case of the butene-1 copolymer, the comonomers usable therefor are preferably α-olefins such as ethylene, propylene, pentene-1, hexene-1, octene-1, 4-methylpentene-1, etc. Such comonomers are introduced to improve the softness and transparency, etc. of polybutene-1, but they tend to lower the melting point of polybutene-1, which is 125-130°C in the case of a homopolyer. If the melting point of polybutene-1 is too low, the polybutene-1 shows a poor leat resistance. Accordingly, the amount of the comonomer introduced into the copolymer is preferably about 10 mol % or less, more preferably about 5 mol % or less. From the aspect of formability and mechanical properties of moldings, the melt flow rate (MFR, at 190°C under 2,160 g) of the crystalline polymer or copolymer of butene-1 is preferably 0.2-30 g/10 minutes, more preferably 0.5-25 g/10 minutes.

Incidentally, since the crystalline polymer or copolymer of propylene and the crystalline polymer or copolymer of butene-1 are highly compatible with each other, they may be blended at any ratio.

(b) Amorphous polypropylene

The amorphous polypropylene (b) used in the present invention is atactic polypropylene, or an atactic copolymer based on propylene. The amorphous polypropylene is by-produced in the production of crystalline polymers or copolymers of propylene, or can be produced by a radical polymerization method, etc.

The comonomers usable for the amorphous copolymer include α-olefins such as ethylene, butene-1, pentene-1, hexene-1, octene-1, 4-methylpentene-1, etc. The amount of the comonomer is preferably 1-30 mol %, more preferably 2-25 mol %.

It is preferable in the present invention that the amorphous polypropylene has a melt viscosity of 300-100,000 cps, particularly 500-80,000 cps at 190°C, and a softening point (measured by a ring and ball method) of 100-160°C, particularly 110-150°C.

(iii) Proportions of components

Based on the total amount (100 weight %) of the components (a) and (b), the crystalline polyolefin (a) is preferably 50-95 weight %, and the amorphous polypropylene (b) is preferably 50-5 weight %. If the amount of the crystalline polyolefin (a) is smaller than 50 weight % (if the amount of the amorphous) polypropylene (b) exceeds 50 weight %), the resulting sheet would show poor mechanical properties. On the other hand, if the amount of the crystalline polyolefin (a) exceeds 95 weight % (if the amount of the amorphous polypropylene (b) is smaller than 5 weight %), the resulting sheet would tend to be poor in softness. Particularly preferable are 55-92 weight % of the crystalline polyolefin (a) and 45-8 weight % of the amorphous polypropylene (b).

(3) Other components

To achieve good formability and mechanical properties, a styrene-based or olefin-based thermoplastic elastomer, a hydrogenated synthetic petroleum resin, etc. may be added.

(c) Styrene-based or olefin-based thermoplastic elastomer

(i) Styrene-based thermoplastic elastomer

The styrene-based thermoplastic elastomer is a block copolymer consisting of styrene blocks and olefin blocks. The olefin block may be an ethylene-propylene copolymer or an ethylene-butylene copolymer, etc.

In a case where the olefin block is the ethylene-propylene copolymer, a styrene-ethylene-propylene-styrene copolymer (SEPS) is preferable, and in a case where the olefin block is the ethylene-butylene copolymer, a styrene-ethylene-butylene-styrene copolymer (SEBS) is preferable. Both copolymers preferably have a styrene content of 10-40 weight %, and a melt flow rate (MFR, at 230°C under 2,160 g) of 0.1-50 g/10 minutes, particularly 0.2-40 g/10 minutes from the aspect of formability and mechanical properties.

3

EP 0 564 206 A2

These styrene-based thermoplastic elastomer can be produced by a known method. Specifically, SEPS may be produced by hydrogenating a block copolymer of polystyrene and polyisoprene (SIS). Also, SEBS may be produced by hydrogenating a block copolymer of polystyrene and polybutadiene (SBS).

(ii) Olefin-based thermoplastic elastomer

The olefin-based thermoplastic elastomers usable in the present invention include an ethylene-propylene copolymer (EPR), an ethylene-propylene-diene copolymer (EPDM), etc. Diene components in EPDM may be 5-ethylidene-2-norbornene, dicyclopentadiene, 1,4-hexadiene, etc. In the elastomer, the propylene content is preferably 20-40 weight %. Such olefin-based thermoplastic elastomer can be produced by a known method.

To achieve good formability and mechanical properties, it is preferable that the olefin-based thermoplastic elastomer has a melt flow rate (MFR, at 230°C under 2,160 g) of 0.2-10 g/10 minutes, particularly 0.5-8 g/10 minutes.

(iii) Proportions of components

In the composition containing the thermoplastic elastomer (i) and/or (ii), the crystalline polyolefin (a) is preferably 40-95 weight %, the amorphous polypropylene (b) is preferably 1-45 weight %, and the thermoplastic elastomer (c) is preferably 1-45 weight %, based on the total amount (100 weight %) of the components (a), (b) and (c). If the amount of each component exceeds the above range, the composition would tend to show a poor balance of transparency, softness and heat resistance. The more preferred proportions are such that the crystalline polyolefin (a) is 45-90 weight %, the amorphous polypropylene (b) is 2-40 weight %, and the thermoplastic elastomer (c) is 2-45 weight %.

(d) Hydrogenated synthetic petroleum resin

The above polyolefin composition may further contain a hydrogenated synthetic petroleum resin in order to improve the softness and transparency thereof.

The hydrogenated synthetic petroleum resin can be produced by polymerizing $C_6$-$C_9$ fractions in the presence of a Friedel-Crafts catalyst such as $AlCl_3$, $BF_3$, etc, to form a so-called $C_9$ petroleum resin (containing as main components styrene, vinyl toluene, $\alpha$-methylstyrene, indene, methylindene, etc.) and hydrogenating the resulting petroleum resin. From the aspect of stability, the larger the hydrogenation degree of the hydrogenated synthetic petroleum resin, the better. Specifically, the hydrogenation degree of the hydrogenated synthetic petroleum resin is preferably 50% or more, particularly 70% or more. Incidentally, the completely hydrogenated synthetic petroleum resin is a hydrogenated synthetic $C_9$ alicyclic petroleum resin.

From the aspect of compatibility with the crystalline polyolefin (a) and the amorphous polypropylene (b), formability and mechanical properties of moldings, etc., the above hydrogenated synthetic petroleum resin preferably has a softening point (measured by a ring and ball method) of 70-150°C, particularly 80-140°C, and a molecular weight of about 500-2,000.

The proportion of the hydrogenated synthetic petroleum resin is preferably 1-15 weight %, particularly 2-13 weight %, based on the total amount (100 weight %) of the crystalline polyolefin (a), the amorphous polypropylene (b), the thermoplastic elastomer (c) (if any) and the hydrogenated synthetic petroleum resin (d). If the amount of the hydrogenated synthetic petroleum resin (d) is less than 1 weight %, sufficient effects of improving transparency and softness cannot be obtained by the addition of the hydrogenated synthetic petroleum resin (d). On the other hand, if the amount of the hydrogenated synthetic petroleum resin (d) exceeds 15 weight %, such problems as blocking, decrease in heat resistance, etc. would be likely to take place.

(e) Additives

The first sheet for the medical container may contain additives such as slip agents, anti-blocking agents, plasticizers, inorganic fillers, stabilizers, etc., if necessary.

(4) Production of first sheet

First, the components are melt-blended by a double-screw extruder, a static blender, etc. to form a polyolefin composition. In this process, a master batch method may also be utilized.

The resulting composition is then formed into the sheet by extrusion molding, thermoforming, blow molding, etc. In one example, the composition is extruded through a T-die or a tubular die at a temperature higher than the fluidizing temperature of the composition. In this case, a flat or tubular sheet or a parison extruded from the die is preferably cooled by a casting roller or water to suppress the crystallization. The extrusion temperature is 160-230°C for the composition containing no thermoplastic elastomer, and 150-240°C, particularly 160-220°C for the composition containing the thermoplastic elastomer.

The resulting sheet may be used in an undrawn state, but if necessary, it may be drawn. Also, to improve the anti-blocking properties, inner and outer surfaces of the sheet may be roughened by embossing,

4

etc.

(5) Thickness of first sheet

The first sheet thus obtained generally has a thickness of 30-500 μm, preferably 50-400 μm, although the thickness may vary depending on the types and shapes of the medical container.

[2] Second sheet for medical container

The second sheet for the medical container of the present invention has a multi-layer structure comprising (A) an outer layer and an inner layer both made of at least one crystalline polyolefin, and (B) an intermediate layer made of a polymer composition comprising (a) at least one crystalline polyolefin and (b) amorphous polypropylene.

[A] Crystalline polyolefin layer

The crystalline polyolefin layer (A) is made of at least one crystalline polyolefin, for instance, crystalline polypropylene, crystalline polybutene-1, and/or a crystalline copolymer based on propylene or butene-1. These crystalline polyolefins (polymers or copolymers) may be the same as described in [1](1)(a) above.

[B] Polymer composition layer

From the aspect of mechanical properties (softness, strength, etc.) and formability, the polymer composition layer (B) is preferably made of a polymer composition comprising (a) at least one crystalline polyolefin and (b) amorphous polypropylene. The crystalline polyolefin (a) and the amorphous polypropylene (b) may be the same as described in [1](1)(a) and [1](1)(b) above.

The polymer composition for the intermediate layer (B) preferably comprises 30-90 weight % of at least one crystalline polyolefin (a), and 70-10 weight % of amorphous polypropylene (b). More preferably, the component (a) is 40-80 weight %, and the component (b) is 60-20 weight %.

To achieve good formability and mechanical properties, a styrene-based or olefin-based thermoplastic elastomer, a hydrogenated synthetic petroleum resin, etc. may be added. The styrene-based or olefin-based thermoplastic elastomers are described in [1](3)(c) above, and the hydrogenated synthetic petroleum resins are described in [1](3)(d) above.

In the composition containing the thermoplastic elastomer (i) and/or (ii), the crystalline polyolefin (a) is preferably 30-70 weight %, the amorphous polypropylene (b) is preferably 10-60 weight %, and the thermoplastic elastomer (c) is preferably 5-50 weight %, based on the total amount (100 weight %) of the components (a), (b) and (c). The more preferred proportions are such that the crystalline polyolefin (a) is 35-65 weight %, the amorphous polypropylene (b) is 15-55 weight %, and the thermoplastic elastomer (c) is 10-45 weight %.

In the composition containing the hydrogenated synthetic petroleum resin (d), the proportion of the hydrogenated synthetic petroleum resin (d) is preferably 1-15 weight %, particularly 2-13 weight %, based on the total amount (100 weight %) of the crystalline polyolefin (a), the amorphous polypropylene (b), the thermoplastic elastomer (c) (if any) and the hydrogenated synthetic petroleum resin (d). If the amount of the hydrogenated synthetic petroleum resin (d) is less than 1 weight %, sufficient effects of improving transparency and softness cannot be obtained by the addition of the hydrogenated synthetic petroleum resin (d). On the other hand, if the amount of the hydrogenated synthetic petroleum resin (d) exceeds 15 weight %, such problems as decrease in heat resistance, etc. would be likely to take place.

The amorphous polypropylene or its composition may contain various additives, if necessary. Such additives may be the same as described in [1](3)(e) above.

(2) Layer structure

In the second sheet, the crystalline polyolefin layer constitutes inner and outer layers, and the polymer composition layer constitutes an intermediate layer. Specifically, the second sheet has a three-layer structure of crystalline polyolefin layer / polymer composition layer / crystalline polyolefin layer. Incidentally, additional crystalline polyolefin layers may be introduced into the polymer composition intermediate layer to increase the number of layers of the sheet.

The reason why the polymer composition layer constitutes an intermediate layer is that the amorphous polypropylene has stickiness, occasionally resulting in blocking if the inner and outer layers are formed from the amorphous polypropylene-containing composition.

In addition to the above layers, the second sheet may further contain, on either or both of the inner and outer layers, one or more layers of polyethylene, an ethylene-vinyl acetate copolymer, an ethylene-methyl acrylate copolymer, an ethylene-ethyl acrylate copolymer, an ethylene-methyl methacrylate copolymer, an ethylene-vinyl alcohol copolymer, polyacrylonitrile, polyvinylidene chloride, nylon-6, nylon-12, poly-*m*-xylylene adipamide, polyethylene terephthalate, polybu tylene terephthalate, polyurethane, etc. The additional layer each preferably has a thickness of 10-100 μm.

(3) Production of second sheet

The second sheet may be produced by extrusion molding, thermoforming, blow molding, etc. In one example, it is produced by co-extruding polymer materials through a multi-layer T-die or a multi-layer tubular die at a temperature higher than the fluidizing temperature of each component, preferably at 170-260°C, more preferably at 175-255°C. A flat or tubular sheet or a parison extruded from the die is preferably cooled by a casting roller or water to suppress the crystallization.

(4) Thickness of second sheet

The second sheet preferably has a total thickness of 50-1,000 μm, particularly 80-800 μm. Also, each crystalline polyolefin layer as the inner and outer layers preferably has a thickness of 5-100 μm, particularly 10-80 μm.

## [3] Medical container

The first or second sheet in the form of a sheet or a parison is formed into the medical container having appropriate thickness and shape by heat sealing, etc.

The medical containers are not restricted to bags for containing medical liquids used in the field of medicine, such as blood, a physiological saline solution, an electrolyte solution, dextran preparations, mannitol preparations, glucose preparations, amino acid preparations, but include tubes for transferring such medical liquids. Also, since the container made of the polymer composition of the present invention has a high permeability for a gas such as oxygen, carbon dioxide, etc., it is suitable for keeping platelet.

The present invention will be explained in detail by way of the following Examples without intention of restricting the scope of the present invention thereto. Incidentally, all sheets prepared in Examples and Comparative Examples were used were used without drawing.

### Examples 1-14, Comparative Examples 1-3

### [1] Experimental Procedures

(1) Preparation of composition

Crystalline polyolefins (a), amorphous polypropylene (b) and hydrogenated synthetic petroleum resins (d) shown in Table 1 were mixed in proportions shown in Table 2 and melt-blended by a double-screw extruder of 45 mm in diameter at 180-200°C to form composition pellets.

(2) Formation of sheet

The composition pellets obtained in the step (1) above were supplied to an extruder of 65 mm in diameter and extruded through a T-die having a lip length of 400 mm and a lip width of 0.8 mm at 200°C. The resulting sheet was cooled by a casting roller at 15°C and trimmed, As a result, a sheet having a thickness of about 300 μm and a width of 300 mm was taken up at a speed of 10 m/minute.

(3) Measurement of transparency of sheet

The sheet obtained in the step (2) above was subjected to a light transmission measurement at a wave length of 450 nm by a double beam-type, autographic recording, spectrophotometer (UV-300 available from Shimadzu Corporation).

(4) Measurement of softness of sheet

The sheet obtained in the step (2) above was cut to form a dumbbell-shaped specimen, and the tensile modulus of the dumbbell-shaped specimen was measured according to JIS K7113. The measured value of the tensile modulus was used as a measured of the softness of the sheet.

(5) Sterilization test with high-pressure steam

The sheet obtained in the step (2) above was cut to a size of 150 mm x 250 mm, and two cut sheets were heat-sealed on a hot plate to form a bag. After introducing 1000 ml of a physiological saline solution, the bag was sealed. This bag was placed in a retort-type, high-pressure steam sterilizer at 115°C and 1.8 kg/cm²-gauge for 30 minutes. After completion of the sterilization treatment, the bag was cooled to room temperature, and left to stand for 24 hours. Thereafter, the transparency and the change of appearance such as shape, etc. were observed.

(6) Measurement of exuded heavy metals, etc.

The sheet obtained in the step (2) above was measured with respect to exuded heavy metals or other exudates, according to a method defined by "Method for Testing Plastic Containers for Infusion," in the section of "General Test Method" of the "Japanese Pharmacopoeia."
    The results are shown in Table 2.

Table 1

| A1 | Isotactic homopolypropylene having a flexural modulus of 12,500 kg/cm$^2$, a Vicat softening point of 150°C, and a melt flow rate (MFR, at 230°C under 2,160 g) of 4.0 g/10 minutes. |
|---|---|
| A2 | Isomatic propylene copolymer (comonomer: butene-1) having a flexural modulus of 5,500 kg/cm$^2$, a Vicat softening point of 121°C, and a melt flow rate (MFR, at 230°C under 2,160 g) of 4.5 g/10 minutes. |
| A3 | Isotactic homopolybutene-1 having a flexural modulus of 2,500 kg/cm$^2$, a melting of 128°C, and a melt flow rate (MFR, at 190°C under 2,160 g) of 4.0 g/10 minutes. |
| B1 | Amorphous homopolypropylene having a softening point of 152°C measured by a ring and ball method. |
| B2 | Amorphous propylene copolymer (comonomer: butene-1) having a softening point of 110°C measured by a ring and ball method. |
| D1 | Completely hydrogenated synthetic $C_9$ petroleum resin having a softening point of 100°C available from Arakawa Chemical Industries, Ltd. as Arkon P100. |
| D2 | Partially hydrogenated synthetic $C_9$ petroleum resin having a softening point of 100°C available from Arakawa Chemical Industries, Ltd. as Arkon M100. |

Table 2

| No. | Composition (weight ratio) | Light Transmittance* | Tensile Modulus** |
|---|---|---|---|
| **Example** | | | |
| 1 | (A1) 80 / (B2) 20 | 90 | 2000 |
| 2 | (A1) 80 / (B2) 18 / (D1) 2 | 92 | 1800 |
| 3 | (A2) 85 / (B1) 15 | 91 | 1800 |
| 4 | (A2) 85 / (B2) 15 | 92 | 1600 |
| 5 | (A2) 85 / (B2) 13 / (D1) 2 | 94 | 1400 |
| 6 | (A2) 85 / (B2) 10 / (D1) 5 | 96 | 1300 |
| 7 | (A2) 85 / (B2) 10 / (D2) 5 | 94 | 1300 |
| 8 | (A2) 90 / (B2) 10 | 90 | 2000 |
| 9 | (A3) 90 / (B1) 10 | 90 | 1100 |
| 10 | (A3) 90 / (B1) 8 / (D1) 2 | 92 | 1000 |
| 11 | (A3) 90 / (B1) 8 / (D2) 2 | 91 | 1000 |
| 12 | (A3) 95 / (B1) 5 | 87 | 1400 |
| 13 | (A3) 95 / (B2) 5 | 90 | 1200 |
| 14 | (A3) 95 / (B2) 3 / (D1) 2 | 92 | 1100 |
| **Comparative Example** | | | |
| 1 | (A1) 100 | 68 | 8700 |
| 2 | (A2) 100 | 73 | 4200 |
| 3 | (A3) 100 | 65 | 2300 |

Note: * Unit: %.

** Unit: $kg/cm^2$.

[2] Experimental results

As is clear from Table 2, the sheets of Examples 1-14 each made of a composition comprising a crystalline polyolefin (a) and amorphous polypropylene (b) have good transparency (large light transmittance) and softness (low tensile modulus). Further, it has been observed that by adding a hydrogenated synthetic petroleum resin (d) to such a composition, the transparency and softness of the sheets were remarkably improved.

In all compositions in both Examples and Comparative Examples, the extrusion of sheets could be conducted without difficulty, and the resulting sheets did not suffer from any local defects, foaming etc. It has been confirmed that the levels of exuded heavy metals and other exudates met the requirements of the Japanese Pharmacopoeia. Also, the appearance of the bags was not substantially deteriorated by the high-pressure steam sterilization treatment.

Examples 15-21, Comparative Examples 4 and 5

[1] Experimental Procedures

(1) Preparation of composition
Crystalline polyolefins (a), amorphous polypropylene (b) and thermoplastic elastomers (c) shown in Table 3 were mixed in proportions shown in Table 4 and melt-blended by a double-screw extruder of 45 mm in diameter at 170-190°C to form composition pellets.

(2) Formation of sheet
The composition pellets obtained in the step (1) above were supplied to an extruder of 65 mm in diameter and extruded through a T-die having a lip length of 400 mm and a lip width of 0.8 mm at 190°C. The resulting sheet was cooled by a casting roller at 15°C and trimmed. As a result, a sheet having a thickness of about 350 µm and a width of 300 mm was taken up at a speed of 6 m/minute.

(3) Measurement of transparency and softness of sheet and exuded heavy metals, etc.
Measurement was conducted on each sheet obtained in the step (2) above in the same manner as in Example 1.

(4) Sterilization test with high-pressure steam
The test was conducted in the same manner as in Example 1 except for introducing 800 ml of a physiological saline solution into the bag.

The results are shown in Table 4.

Table 3

A4    Isotactic propylene copolymer (comonomer: butene-1) having a flexural modulus of 5,500 kg/cm², a Vicat softening point of 123°C, and a melt flow rate (MFR, at 230°C under 2,160 g) of 2.0 g/10 minutes.

A5    Isotactic homopolybutene-1 having a flexural modulus of 2,500 kg/cm², a melting point of 128°C, and a melt flow rate (MFR, at 190°C under 2,160 g) of 2.0 g/10 minutes.

B2    Amorphous propylene copolymer (comonomer: butene-1) having a softening point of 110°C measured by a ring and ball method.

B3    Amorphous homopolypropylene having a softening point of 152°C measured by a ring and ball method.

C1    Ethylene-propylene copolymer elastomer (propylene content: 25 weight %) having a melt flow rate (MFR, at

EP 0 564 206 A2

230°C under 2,160 g) of 3.0 g/10 minutes.

C2    Styrene-ethylene-butylene-styrene copolymer elastomer (SEBS) (styrene content: 15 weight %) having a melt flow rate (MFR, at 230°C under 2,160 g) of 1.5 g/10 minutes.

Table 4

| No. | Composition (weight ratio) | Light Transmittance* | Tensile Modulus** |
|---|---|---|---|
| Example | | | |
| 1 5 | (A4) 80 / (B3) 10 / (C1) 10 | 9 0 | 1 7 0 0 |
| 1 6 | (A4) 70 / (B3) 15 / (C1) 15 | 9 2 | 1 4 0 0 |
| 1 7 | (A4) 70 / (B2) 15/ (C1) 15 | 9 3 | 1 6 0 0 |
| 1 8 | (A4) 60 / (B2) 20/ (C2) 20 | 9 3 | 1 3 0 0 |
| 1 9 | (A4) 50 / (B2) 20 / (C2) 30 | 9 3 | 1 2 0 0 |
| 2 0 | (A5) 80 / (B2) 10 / (C2) 10 | 9 0 | 1 3 0 0 |
| 2 1 | (A5) 70 / (B2) 15 / (C2) 15 | 9 1 | 1 1 0 0 |
| Comparative Example | | | |
| 4 | (A4) 100 | 7 4 | 4 0 0 0 |
| 5 | (A5) 100 | 6 7 | 2 2 0 0 |

Note: * Unit: %.

** Unit: $kg/cm^2$.

[2] experimental results

As is clear from Table 4, the sheets of Examples 15-21 each made of a composition of a crystalline polyolefin (a), amorphous polypropylene (b) and a thermoplastic elastomer (c) have good transparency (large light transmittance) and softness (low tensile modulus).

In all compositions in both Examples and Comparative Examples, the extrusion of sheets could be conducted without difficulty, and the resulting sheets did not suffer from any local defects, foaming etc. It has been confirmed that the level of exuded heavy metals met the requirements of the Japanese Pharmacopoeia. Also, the appearance of the bags was not substantially deteriorated by the high-pressure steam sterilization treatment.

Examples 22-24, Comparative Examples 6 and 7

[1] Experimental Procedures

(1) Polymer materials used
    Polymers, copolymers and compositions shown in Table 5 were used.
(2) Formation of multi-layer sheet
    The polymer materials were separately melted in extruders, and supplied to a two-kind, three-layer-type T-die having a lip length of 400 mm and a lip width of 0.8 mm to extrude a multi-layer sheet having

10

an intermediate layer of the polymer composition at 180-220°C. The resulting co-extruded sheet was cooled by a casting roller at 15°C and trimmed. As a result, a multi-layer sheet having a total thickness of about 320 μm and a width of 300 mm was taken up at a speed of 6 m/minute.

(3) Measurement of transparency and softness of sheet and exuded heavy metals, etc.

Measurement was conducted on each multi-layer sheet obtained in the step (2) above in the same manner as in Example 1.

(4) Sterilization test with high-pressure steam

The multi-layer sheet obtained in the step (2) above was cut to a size of 150 mm x 250 mm, and two cut sheets were heat-sealed on a hot plate to form a bag. After introducing 800 ml of a physiological saline solution, the bag was sealed. This bag was placed in a retort-type, high-pressure steam sterilizer at 115°C and 1.8 kg/cm²-gauge for 25 minutes. After completion of the sterilization treatment, the bag was cooled to room temperature, and left to stand for 48 hours. Thereafter, the transparency and the change of appearance such as shape, etc. were observed.

The results are shown in Table 6.

Table 5

| | | |
|---|---|---|
| A4 | Isotactic propylene copolymer (comonomer: butene-1) having a flexural modulus of 5,500 kg/cm², a Vicat softening point of 123°C, and a melt flow rate (MFR, at 230°C under 2,160 g) of 2.0 g/10 minutes. | |
| A5 | Isotactic homopolybutene-1 having a flexural modulus of 2,500 kg/cm², a melting point of 128°C, and a melt flow rate (MFR, at 190°C under 2,160 g) of 2.0 g/10 minutes. | |
| B4 | Composition of an amorphous propylene copolymer (B2) (comocomer: butene-1) having a softening point of 110°C measured by a ring and ball method, and an isotactic propylene copolymer (A4) at a weight ratio of 60:40. | |

Table 6

| No. | Thickness of Inner layer / Intermediate layer / Outer layer (μm) | Light Transmittance* | Tensile Modulus** |
|---|---|---|---|
| Example | | | |
| 22 | (A4) 30 / (B4) 260 / (A4) 30 | 92 | 1800 |
| 23 | (A4) 40 / (B4) 240 / (A4) 40 | 90 | 2000 |
| 24 | (A5) 30 / (B4) 260 / (A5) 30 | 90 | 1300 |
| Comparative Example | | | |
| 6 | (A4) 100 | 78 | 4400 |
| 7 | (A5) 100 | 70 | 2200 |

Note: * Unit: %.

** Unit: kg/cm².

[2] Experimental results

As is clear from Table 6, the multi-layer sheets of Examples 22-26 each constituted by inner and outer layers made of a crystalline polyolefin and an intermediate layer made of the polymer composition have good transparency (large light transmittance) and softness (low tensile modulus).

In all compositions in both examples and Comparative examples, the extrusion of sheets could be conducted without difficulty, and the resulting sheets did not suffer from any local defects, forming etc. It has been confirmed that the level of exuded heavy metals met the requirements of the Japanese Pharmacopoeia. Also, the appearance of the bags was not substantially deteriorated by the high-pressure steam sterilization treatment.

As described above, since the medical container according to the present invention is constituted by a single-layer or multi-layer sheet formed by utilizing a polymer composition of a crystalline polyolefin and amorphous polypropylene, it can maintain good softness and transparency even after the high-pressure steam sterilization treatment. In addition, it has excellent heat resistance and formability. further, since it is substantially free from exudates, it can be safely used for containers such as bags, tubes, etc. for containing or transferring medical liquids.

## Claims

1. A medical container the or a layer of which includes a polymer composition comprising as main components (a) at least one crystalline polyolefin and (b) amorphous polypropylene.

2. The medical container according to claim 1, wherein said crystalline polyolefin (a) is selected from the group consisting of crystalline homopolypropylene, crystalline homopolybutene-1 and a crystalline olefin copolymer, and said amorphous polypropylene (b) is selected from the group consisting of amorphous homopolypropylene and an amorphous propylene copolymer.

3. The medical container according to claim 2, wherein said crystalline olefin copolymer is a crystalline copolymer of propylene and another $\alpha$-olefin, the content of said $\alpha$-olefin being 3-40 mol %.

4. The medical container according to claim 2, wherein said crystalline olefin copolymer is a crystalline copolymer of butene-1 and another $\alpha$-olefin, the content of said $\alpha$-olefin being 10 mol or less.

5. The medical container according to any one of claims 1-4, wherein said crystalline polyolefin is 50-95 weight %, and said amorphous polypropylene is 50-5 weight %.

6. The medical container according to any one of claims 1-4, wherein said polymer composition further contains (c) a styrene-based or olefin-based thermoplastic elastomer.

7. The medical container according to claim 6, wherein said crystalline polyolefin is 40-95 weight %, said amorphous polypropylene is 1-45 weight %, and said styrene-based or olefin-based thermoplastic elastomer is 1-45 weight %.

8. The medical container according to any one of claims 1-7, wherein said polymer composition further contains (d) a hydrogenated synthetic petroleum resin.

9. The medical container according to any one of claims 1-8, wherein said sheet has a thickness of 30-500 $\mu$m.

10. A medical container having a multi-layer structure comprising (A) an outer layer and an inner layer both made of at least one crystalline polyolefin, and (B) an intermediate layer made of a polymer composition comprising (a) at least one crystalline polyolefin and (b) amorphous polypropylene.

11. The medical container according to claim 10, wherein said crystalline polyolefin is selected from the group consisting of crystalline homopolypropylene, crystalline homopolybutene-1 and a crystalline olefin copolymer, and said amorphous polypropylene is selected from the group consisting of amorphous homopolypropylene an amorphous propylene copolymer.

12. The medical container according to claim 11, wherein said crystalline olefin copolymer is a crystalline copolymer of propylene and another $\alpha$-olefin, the content of said $\alpha$-olefin being 3-40 mol %.

13. The medical container according to claim 11, wherein said crystalline olefin copolymer is a crystalline copolymer of butene-1 and another $\alpha$-olefin, the content of said $\alpha$-olefin being 10 mol % or less.

14. The medical container according to any one of claims 10-13, wherein said intermediate layer is made of a polymer composition comprising 30-90 weight % of at least one crystalline polyolefin and 70-10 weight % of said amorphous polypropylene.

15. The medical container according to any one of claims 10-14, wherein the composition of said intermediate layer further contains (c) a styrene-based or olefin-based thermoplastic elastomer.

16. The medical container according to claim 15, wherein the polymer composition of said intermediate layer comprises 30-70 weight % of said crystalline polyolefin, 10-60 weight % of said amorphous polypropylene, and 5-50 weight % of said styrene-based or olefin-based thermoplastic elastomer.

17. The medical container according to any one of claims 10-16, wherein said polymer composition of said intermediate layer further comprises (d) a hydrogenated synthetic petroleum resin.

18. The medical container according to any one of claims 10-17, wherein said multi-layer sheet has a total thickness of 50-1000 µm, and each of the outer layer and the inner layer made of said crystalline polyolefin has a thickness of 5-100 µm.